# EUROPÄISCHE PATENTSCHRIFT

(11) **EP 1 293 714 B1**
(45) Veröffentlichungstag und Bekanntmachung des Hinweises auf die Patenterteilung: **20.07.2005**
(21) Anmeldenummer: 01810895.1
(22) Anmeldetag: 17.09.2001
(51) Int. Cl.: F16L 5/04

(54) **Einbettbare, intumeszierende Rohrdurchführung**
Embeddable, intumescent pipe transit
Passage de conduit, encastrable et expansible

(43) Veröffentlichungstag der Anmeldung: 19.03.2003
(73) Patentinhaber: HILTI Aktiengesellschaft, 9494 Schaan (LI)
(72) Erfinder: Münzenberger, Herbert, 65191 Wiesbaden (DE)
(74) Vertreter: Wildi, Roland

(56) Entgegenhaltungen:
- AU-B- 732 683
- DE-U- 20 007 477
- US-A- 4 669 759
- US-A- 5 390 465

## Beschreibung

Die Erfindung bezeichnet eine in Beton einbettbare, sich im Brandfall intumeszierend verschliessende, Rohrdurchführung zur Durchführung von Leitungen durch gegossene Wände.

Gattungsgemässe Rohrdurchführungen für, verallgemeinert Seitenwände, Decken, Böden umfassende, Wände sind im modernen Baugewerbe üblich.

Nach der US4669759 ist bei einer in Beton einbettbaren, hülsenförmigen Rohrdurchführung aus Kunststoff, welche mittels einem axial endseitigen äusseren Befestigungsflansch auf die Schalung einer später gegossenen Wand temporär vormontierbar ist, die koaxial innenliegende Intumeszenzmasse zum Verschluss dieser im Brandfall, nach der Entfernung der Schalung axial endseitig freiliegend angeordnet, wodurch die Intumeszenzwirkung im Brandfall teilweise in axialer Richtung erfolgt und somit ungenutzt ist. Zudem ist die freiliegende Aschenkruste nicht mechanisch stabilisiert.

Nach der US6161873 weist die Rohrdurchführung zusätzlich eine axial endseitig angeordnete, kreisringförmige Metallscheibe zur feuerfesten Begrenzung der Intumeszenzwirkung auf einen schmalen axialen Verschlussbereich sowie zur mechanischen Stabilisierung der Aschenkruste auf. Diese Metallscheibe verursacht einen technologischen Mehraufwand bei Herstellung und Vormontage, welche bei einem derartigen Massenartikel nachteilig ist.

Des weiteren weist nach der US4619471 eine zweiteilige einbettbare Rohrdurchführung aus Kunststoff einen ersten hülsenförmigen Teil mit einem axial endseitigen äusseren Befestigungsflansch und einen axial innerhalb der Einbettungslänge in den ersten Teil radial eingreifenden zweiten hülsenförmigen Teil auf. Freiraum für eine koaxial innenliegende Intumeszenzmasse zum Verschluss der Rohrdurchführung im Brandfall ist nicht vorhanden.

Zudem ist nach der DE2162251 bei einer innerhalb des Wandloches nachträglich montierbaren Rohrabschottung die Intumeszenzmasse beidseitig von, axial im Wandloch fixierten, kreisringförmigen Metallscheiben axial feuerfest begrenzt sowie axial innerhalb der Einbettungslänge koaxial um die Leitung angeordnet.

Die Aufgabe der Erfindung besteht in der Realisierung einer in hoher Stückzahl technologisch einfach herstellbaren, einbettbaren Rohrdurchführung mit einer Intumeszenzwirkung in einem schmalen axialen Verschlussbereich.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist eine Rohrdurchführung mit einem Befestigungsmittel zur temporären Vormontage auf eine Schalung einer später ausgegossen Wand, eine koaxial innenliegende Intumeszenzmasse zum Verschluss der Rohrdurchführung im Brandfall auf, wobei die Intumeszenzmasse axial innerhalb der Einbettungslänge der Rohrdurchführung in einem radial erweiterten Aufnahmebereich angeordnet ist, wobei der radial erweiterte Aufnahmebereich axial zu den freien Enden der Rohrdurchführung beabstandet ist und axial beidseitig durch Wandabschnitte begrenzt ist.

Durch diesen axial innerhalb der Einbettungslänge der Rohrdurchführung radial erweiterten Aufnahmebereich ist in der später mit Beton ausgegossen Wand die Intumeszenzmasse in einem axialen Hinterschnitt angeordnet und somit durch den Beton beidseitig axial feuerfest begrenzt, wodurch sich im Brandfall stets ein schmaler axialer Verschlussbereich ergibt. Auf eine begrenzende feuerfeste Metallscheibe und die zur Herstellung und Vormontage nötigen Prozessschritte kann daher bei der Massenproduktion verzichtet werden. Die konkrete relative axiale Lage der Intumeszenzmasse innerhalb der Wand ist insbesondere bei Leitungen in Form von gut wärmeleitfähigen Metallrohren bezüglich der Aktivierung unbeachtlich und somit in weiten Grenzen variabel.

Vorteilhaft weist der Aufnahmebereich eine axiale Verschlusslänge einem Zehntel bis zur Hälfte des Innendurchmessers der Rohrdurchführung auf, wodurch ein bezüglich der Intumeszenzwirkung geometrisch günstiger Torus ausgebildet wird.

Vorteilhaft besteht die Rohrdurchführung aus einem zumindest zeitweise fliessfähigen Kunststoff wie PP, PVC oder ABS, wodurch bspw. über Spritzgiessen ein zur Massenproduktion geeignetes Herstellungsverfahren verwendbar ist.

Vorteilhaft ist die Rohrdurchführung aus zumindest zwei jeweils hinterschneidungsfreien, weiter vorteilhaft identisch geformten, Teilen zusammengesetzt, wodurch bei der Herstellung eine starre Intumeszenzmasse sowie ein einfaches Spritzgusswerkzeug für hinterschneidungsfreien Formen verwendbar ist.

Vorteilhaft sind beide Teile über jeweils zugeordnete Führungsmittel, weiter vorteilhaft über Zylindermantelflächenbereiche, zueinander geführt vormontierbar, was die passende Vormontage erleichtert.

Vorteilhaft sind beide Teile über Arretierungsmittel, weiter vorteilhaft über Schnapphaken an einem Teil und Ausnehmungen an dem anderen Teil, in der vormontierten Position gegeneinander arretierbar, wodurch eine in sich fest verbundene Rohrdurchführung zur Montage verfügbar ist.

Vorteilhaft ist die Rohrdurchführung längs der Achse geteilt, wodurch die Teile als zwei Halbschalen ausgebildet und somit platzsparend ineinander stapelbar sind.

Alternativ vorteilhaft sind die Rohrdurchführung senkrecht zur der Achse innerhalb des Aufnahmebereiches geteilt, wodurch die Teile als zwei ringförmig abdichtbare Teilhülsen ausgebildet sowie über besonders einfache, rotationssymmetrische Werkzeuge herstellbar sind.

Vorteilhaft ist dem geteilten Aufnahmebereich neben der Intumeszenzmasse eine kreisringförmige Dichtmembran dichtend zuordenbar, wodurch der Einsatz einer für einen spezifischen Leitungsdurchmesser ausgebildeten Dichtmembran einfach vor Ort erfolgen kann.

Die Erfindung wird bezüglich eines vorteilhaften Ausführungsbeispiels näher erläutert mit:
Fig. 1 als Rohrdurchführung
Fig. 2 als Variante der Rohrdurchführung

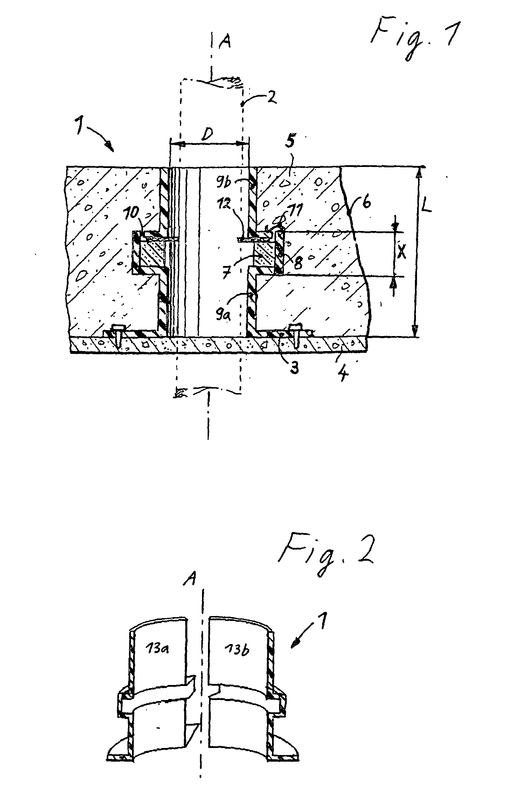

Nach Fig. 1 weist eine hülsenförmige Rohrdurchführung 1 mit eine Achse A aus einem thermoplastischen Kunststoff für eine als Metallrohr ausgebildete Leitung 2 mit einem als Flansch ausgebildeten Befestigungsmittel 3, welches zur temporären Vormontage auf eine Schalung 4 einer später mit Beton 5 ausgegossen Wand 6 genagelt ist, eine koaxial innenliegende Intumeszenzmasse 7 auf, welche axial innerhalb der Einbettungslänge L der Rohrdurchführung 1 in einem radial erweiterten Aufnahmebereich 8 angeordnet ist, dessen axiale Verschlusslänge X etwa dem halben Innendurchmessers D der Rohrdurchführung 1 entspricht. Die Teilhülsen 9a, 9b sind über als Zylindermantelflächenbereiche ausgebildete Führungsmittel 10 zueinander geführt sowie über als Schnapphaken und Ausnehmungen ausgebildete Arretierungsmittel 11 fest verbunden. Die Rohrdurchführung 1 ist senkrecht zur Achse A in zwei Teilhülsen 9a, 9b geteilt und dem geteilten Aufnahmebereich 8 neben der Intumeszenzmasse 7 eine kreisringförmige Dichtmembran 12 dichtend zugeordnet.

Nach Fig. 2 ist die Rohrdurchführung 1 aus zwei jeweils hinterschneidungsfreien, längs zur Achse A geteilten, identisch geformten Halbschalen 13a, 13b zusammengesetzt.

## Patentansprüche

1. Rohrdurchführung zur Durchführung einer Leitung (2) mit einem Befestigungsmittel (3) zur temporären Vormontage auf einer Schalung (4) einer später ausgegossenen Wand (6) und mit einer koaxial innenliegenden Intumeszenzmasse (7), axial innerhalb einer Einbettungslänge (L) in einem radial erweiterten Aufnahmebereich (8) angeordnet ist, **dadurch gekennzeichnet, dass** der radial erweiterte Aufnahmebereich (8) axial zu den freien Enden der Rohrdurchführung beabstandet ist und axial beidseitig durch Wandabschnitte begrenzt ist.

2. Rohrdurchführung nach Anspruch 1, **dadurch gekennzeichnet, dass** der Aufnahmebereich (8) eine axiale Verschlusslänge (X) von einem Zehntel bis zur Hälfte des Innendurchmessers (D) auf weist.

3. Rohrdurchführung nach Anspruch 1 oder 2, **dadurch gekennzeichnet, dass** diese aus einem zumindest zeitweise fliessfähigen Kunststoff besteht.

4. Rohrdurchführung nach einem der vorherigen Ansprüche, **dadurch gekennzeichnet, dass** diese aus zumindest zwei jeweils hinterschneidungsfreien, optional identisch geformten, Teilen zusammengesetzt ist.

5. Rohrdurchführung nach Anspruch 4, **dadurch gekennzeichnet, dass** beide Teile über jeweils zugeordnete Führungsmittel (10) zueinander geführt vormontierbar sind.

6. Rohrdurchführung nach Anspruch 4 oder 5, **dadurch gekennzeichnet, dass** beide Teile über Arretierungsmittel (11) in der vormontierten Position gegeneinander arretierbar sind.

7. Rohrdurchführung nach einem der Ansprüche 4 bis 6, **dadurch gekennzeichnet, dass** diese längs zur Achse (A) geteilt ist.

8. Rohrdurchführung nach einem der Ansprüche 4 bis 6, **dadurch gekennzeichnet, dass** diese innerhalb des Aufnahmebereiches (8) senkrecht zur der Achse (A) geteilt ist.

9. Rohrdurchführung nach Anspruch 8, **dadurch gekennzeichnet, dass** dem geteilten Aufnahmebereich (8) neben der Intumeszenzmasse (7) eine kreisringförmige Dichtmembran (12) dichtend zuordenbar ist.

## Claims

1. Pipe transit for passing through a conduit (2), having a fixing means (3) for temporary preliminary mounting on a formwork (4) for a wall (6) to be cast later and having a coaxially internally situated intumescent mass (7), which is arranged axially within a bedding length (L) in a radially extended accommodating region (8), **characterised in that** the radially extended accommodating region (8) is axially spaced from the free ends of the pipe transit and is axially limited on both sides by wall sections.

2. Pipe transit according to claim 1, **characterised in that** the accommodating region (8) has an axial seal length (X) in the range of one tenth to one half of the internal diameter (D).

3. Pipe transit according to claim 1 or 2, **characterised in that** it is made from an at least temporarily flowable plastics material.

4. Pipe transit according to one of the previous claims, **characterised in that** it is assembled from at least two undercut-free, optionally identically formed members.

5. Pipe transit according to claim 4, **characterised in that** both members may be preassembled, guided towards each other by means of respectively allocated guiding means (10).

6. Pipe transit according to claim 4 or 5, **characterised in that** both members may be arrested relative to one another in the preassembled position with arresting means (11).

7. Pipe transit according to one of the claims 4 to 6, **characterised in that** it is divided along the axis (A).

8. Pipe transit according one of the claims 4 to 6, **characterised in that** it is divided within the accommodating region (8) perpendicular to the axis (A).

9. Pipe transit according to claim 8, **characterised in that** a circular ring-shaped sealing membrane (12) is assigned in sealing manner to the divided accommodating region (8) adjoining the intumescent mass (7).

## Revendications

1. Passage tubulaire pour le passage d'un conduit (2), avec un moyen de fixation (3) pour le prémontage temporaire sur un coffrage (4) d'un mur coulé ultérieurement (6) et avec une matière intumescente (7) qui est positionnée coaxialement à l'intérieur et qui est disposée axialement dans les limites d'une longueur d'insertion (L) dans une zone réceptrice élargie radialement (8), **caractérisé en ce que** la zone réceptrice élargie radialement (8) est distante axialement des extrémités libres du passage tubulaire et est limitée axialement, des deux côtés, par des portions de mur.

2. Passage tubulaire selon la revendication 1, **caractérisé en ce que** la zone réceptrice (8) possède une longueur axiale d'encastrement (X) représentant entre un dixième et la moitié du diamètre intérieur (D).

3. Passage tubulaire selon la revendication 1 ou 2, **caractérisé en ce qu'**il est constitué d'une matière plastique au moins temporairement coulante.

4. Passage tubulaire selon une des revendications précédentes, **caractérisé en ce qu'**il se compose d'au moins deux pièces sans contre-dépouille, optionnellement de forme identique.

5. Passage tubulaire selon la revendication 4, **caractérisé en ce que** les deux pièces peuvent être prémontées en étant guidées l'une par rapport à l'autre par des moyens de guidage associés respectifs (10).

6. Passage tubulaire selon la revendication 4 ou 5, **caractérisé en ce que** les deux pièces peuvent être immobilisées l'une par rapport à l'autre en position prémontée par l'intermédiaire de moyens d'arrêt (11).

7. Passage tubulaire selon une des revendications 4 à 6, **caractérisé en ce qu'**il est divisé longitudinalement suivant l'axe (A).

8. Passage tubulaire selon une des revendications 4 à 6, **caractérisé en ce qu'**il est divisé à l'intérieur de la zone réceptrice (8) perpendiculairement à l'axe (A).

9. Passage tubulaire selon la revendication 8, **caractérisé en ce que**, en plus de la matière intumescente (7), une membrane d'étanchéité en forme de couronne (12) peut être associée à la zone réceptrice divisée (8) pour contribuer à l'étanchéité.
